# EUROPEAN PATENT SPECIFICATION

(11) **EP 1 705 008 B1**
(45) Date of publication and mention of the grant of the patent: **14.09.2011**
(21) Application number: 04805120.5
(22) Date of filing: 23.12.2004
(51) Int. Cl.: B41F 16/00, B60R 13/10, G09F 7/16

(54) **APPARATUS FOR INCORPORATING GRAPHICAL ELEMENTS ON METAL OR ACRYLIC SURFACES**
VORRICHTUNG ZUR AUFNAHME VON GRAPHISCHEN ELEMENTEN AUF METALL- ODER ACRYLFLÄCHEN
DISPOSITIF D'INCORPORATION D'ELEMENTS GRAPHIQUES SUR DES SURFACES METALLIQUES OU ACRYLIQUES

(30) Priority: 15.01.2004 ES 200400080
(43) Date of publication of application: 27.09.2006
(73) Proprietor: INDUSTRIAS SAMAR'T, S.A., 17600 Figueres (Gerona) (ES)
(72) Inventor: SANCHEZ CASADEVALL, Enrique, E-17600 Figueres (Gerona) (ES)
(74) Representative: Munoz Garcia, Antonio
(86) International application number: PCT/ES2004/000577
(87) International publication number: WO 2005/068198

(56) References cited:
- DE-A1- 3 741 232
- DE-A1- 4 241 210
- JP-A- 2 052 741
- US-A- 4 542 691
- US-A- 4 922 816

## Description

### Object of the Invention

The present specification relates to an application for a patent of invention corresponding to an apparatus for incorporating graphics in metallic or acrylic surfaces, the purpose of which lies in transferring the graphics arising from the actuation of a die located on the lower side of a heat-transmitting die, placed on an upper compounder and acting in collaboration with a heat-generating element on a sheet of plastic material or painted template, provided with a coating of paint of one or several colors in the side opposite to the one receiving heat, achieving that the color or colors are located on the acrylic or aluminium plate, coating the character arising from the actuation of the die pressing from the upper side of the plate.

### Field of the Invention

The invention has an application within the industry dedicated to the manufacture of license plates, placards or the like.

### Background of the Invention

The applicant is the proprietor of a plurality of patents of invention and utility model registrations all of which are related to the construction, obtaining and configuration of license plates and similar elements.

However, none of them includes the structure of this apparatus described below although there are some documents having similar features.

### Description of the Invention

The apparatus for incorporating graphics in metallic or acrylic surfaces provided by the invention substantially reduces the operations for obtaining the transfer of graphics on the surfaces of interest.

More specifically, the apparatus for incorporating graphics in metallic or acrylic surfaces object of the invention is formed from the incorporation of a coating of paint of one or several colors on a sheet of plastic material and in one of its sides, and according to the actuation of a heat-generating element raising the temperature of the sheet carrying the paint of one or several colors incorporated in the side opposite to the one receiving heat and the actuation of a die pressing from the upper side of the plate, it achieves that the plate receives both the configuration of the characters and the coating of one or several colors arising from the template or painted sheet.

The heat-generating source can be fixed or moving and obviously acts when the relevant pressure is applied on the side opposite to the one provided with the color or colors in the plastic sheet, achieving that this color coats the graphics arising from the actuation of the pressing die.

### Description of the Drawings

In order to complement the description which is being carried out and for the purpose of helping to better understand the features of the invention, a sheet of drawings is enclosed in this specification as an integral part thereof and in which the following is depicted with an illustrative and non-limiting character:

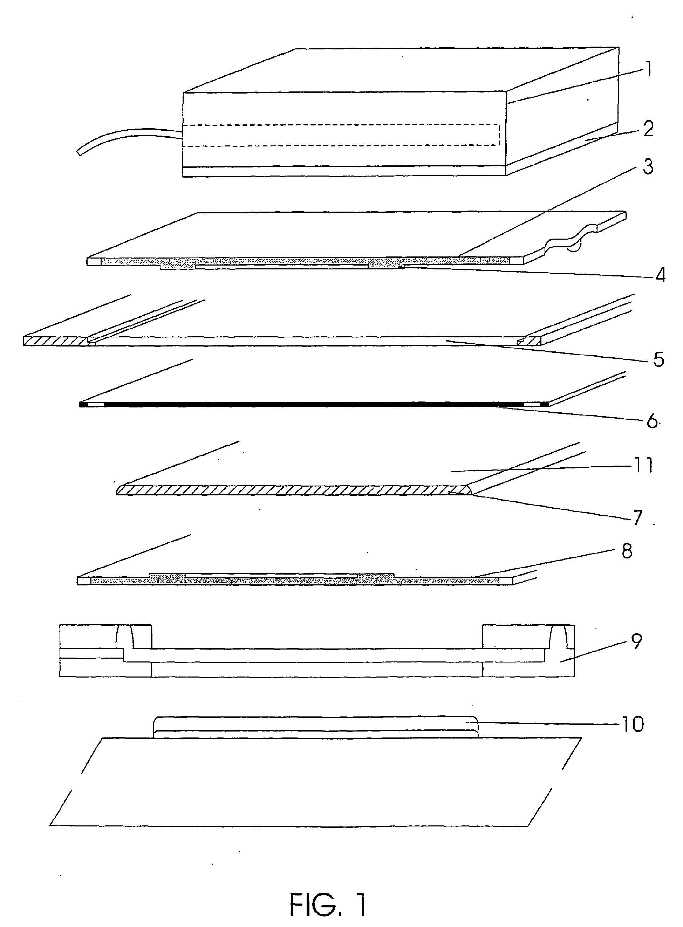

Figure 1 shows a perspective view of the different elements forming the apparatus for incorporating graphics in metallic or acrylic surfaces object of the invention.

### Preferred Embodiment of the Invention

In view of the single Figure 1, it can be observed that the apparatus for incorporating graphics in metallic or acrylic surfaces is formed by a heating body (1) having in coincidence with one of its larger sides a coating (2) made of rubber, silicone or a metallic material and attached to the surface of a heat-transmitting die (3) having, in the side opposite to the one on which the coating (2) of the heating body (1) is adjacently placed, character embossments (4) made of silicones or metals, coupled to an upper compounder (5) and subsequently to the sheet (6) provided with the coating of paint of one or several colors which will be placed adjacently to the plate (7) made of acrylic material on its front side (11), there being a die (8) which can be used at will located in the side opposite to the front side (11) of the plate (7) using a lower compounder (9) and a lower tamper (10) collaborating for the actuation of the apparatus with the heating body and the other mentioned elements.

In summary, the heating body (1) generates heat and transmits it to the rubber, silicone or metal (2) and the latter, in turn, transmits the heat to the die (3) provided with the embossments (4) and located in the upper compounder (5), the heat passing to the sheet (6) carrying the color or colors on the lower side or the side opposite to the one subjected to the action of heat.

When it is considered to be appropriate to generate a drawing on the body (7) forming the acrylic or aluminium plate, the body (8) or die causes the required embossment to be obtained on the body (7) forming the acrylic or aluminium plate with the action of mechanical, electric or pneumatic pressure.

The laminated surface (7) has a different color from the color or colors incorporated on the template (6) or sheet carrying the graphics and due to the actuation of the lower tamper (10), the guiding of the positioning between the upper compounder (5) and the lower compounder (9) is facilitated and it must be indicated that the lower compounder (9) can have a central cavity for the purpose of placing the dies or it can be configured without a cavity or with differentiated flanges.

## Claims

1. An apparatus for incorporating graphics in metallic or acrylic surfaces such as in license plates, placards or nameplates, comprising a heating body (1) fed by any energy source, said heating body (1) having in one of its larger sides and specifically the lower side a laminated coating (2) made of rubber, silicone or of a metallic material, said coating (2) being coupled to a heat-transmitting die (3) provided at its side opposite to the coating (2) with characterer embossments (4) made of silicone or metal, the heat-transmitting die (3) being coupled to an upper compounder (5) and attached to a polyester sheet (6) incorporating in the side opposite to the one to which the die element (3) is attached a coating of paint of one or several colors to be transferred to the surface (11) of an acrylic or aluminium plate (7), which apparatus may or may not incorporate in the opposite side of the plate (7), a die (8) located on a compounder (9) on to which a lower tamper (10) acts.

2. An apparatus for incorporating graphics in metallic or acrylic surfaces according to claim 1, **characterized in that** the plate (7) can be provided with drawings generated by the die (8) in the side opposite to the one carrying the graphics transferred from the polyester sheet (6).

3. An apparatus for incorporating graphics in metallic or acrylic surfaces according to claim 1, **characterized in that** the surface of the acrylic or aluminium plate (7) has a color different to the color or colors incorporated in one of the sides of the polyester sheet (6).

4. An apparatus for incorporating graphics in metallic or acrylic surfaces according to claim 1, **characterized in that** the lower compounder (9) can have a central cavity for placing the dies or it can be provided with different flanges or even without a cavity.

5. An apparatus for incorporating graphics in metallic or acrylic surfaces according to claim 1, **characterized in that** the painted polyester sheet (6) incorporates a coating of paint of one or several colors in the lower side or in its entire surface.

## Patentansprüche

1. Vorrichtung zur Einfügung von Grafiken in Metall- oder Acrylflächen, wie zum Beispiel in Nummernschilder, Plakate oder Schilder, umfassend: einen durch irgendeine Energiequelle versorgten Heizkörper (1), wobei der genannte Heizkörper (1) auf einer seiner größeren Seiten und besonders auf der unteren Seite, einen laminierten Überzug (2) aufweist, welcher aus Gummi, Silikon oder aus einem Metallmaterial gebildet ist, wobei der genannte Überzug (2) mit einer wärmeübertragenden Matrize (3) angekoppelt wird, welche auf ihre dem Überzug (2) gegenüberliegenden Seite mit aus Silikon oder Metall gebildeten Charakterprägungen (4) versehen ist, wobei die wärmeübertragende Matrize (3) mit einem oberen Compounder (5) angekoppelt und mit einer Polyesterfolie (6) verbunden wird, welche auf der Seite gegenüberliegend derjenigen, die mit dem Matrizenelement (3) verbunden wird, einen Farbüberzug aus einer oder mehreren Farben aufweist, welche auf die Fläche (11) von einer Acryl- oder Aluminiumplatte (7) übertragen werden sollen, wobei die Vorrichtung auf der gegenüberliegenden Seite der Platte (7) eine Matrize (8) aufweisen kann, welche sich auf einem Compounder (9) befindet, auf dem ein unterer Stempel (10) wirkt.

2. Vorrichtung zur Einfügung von Grafiken in Metall- oder Acrylflächen nach Anspruch 1, **dadurch gekennzeichnet, dass** die Platte (7) mit Bildern versehen sein kann, welche durch die Matrize (8) auf der Seite gegenüberliegend derjenigen, welche die von der Polyesterfolie (6) übertragenden Grafiken trägt, erzeugt werden.

3. Vorrichtung zur Einfügung von Grafiken in Metall- oder Acrylflächen nach Anspruch 1, **dadurch gekennzeichnet, dass** die Fläche der Acryl- oder Aluminiumplatte (7) eine Farbe aufweist, welche von der Farbe oder Farben verschieden ist, die in einer der Seiten der Polyesterfolie (6) eingefügt sind.

4. Vorrichtung zur Einfügung von Grafiken in Metall- oder Acrylflächen nach Anspruch 1, **dadurch gekennzeichnet, dass** der untere Compounder (9) eine mittlere Aushöhlung zur Anbringung der Matrizen aufweisen kann oder dass er mit verschiedenen Nasen versehen oder sogar ohne Aushöhlung vorgesehen sein kann.

5. Vorrichtung zur Einfügung von Grafiken in Metall- oder Acrylflächen nach Anspruch 1, **dadurch gekennzeichnet, dass** die bemalte Polyesterfolie (6) einen Farbüberzug aus einer oder mehreren Farben auf der unteren Seite oder auf ihrer ganzen Fläche aufweist.

## Revendications

1. Appareil pour incorporer des éléments graphiques sur des surfaces métalliques ou acryliques telles que sur des plaques d'immatriculation, des pancartes ou des plaques commerciales, comprenant un corps de chauffage (1) alimenté par n'importe quelle source d'énergie, ledit corps de chauffage (1) ayant sur l'un de ses côtés le plus long et particulièrement le côté inférieur un revêtement stratifié (2) en caoutchouc, silicone ou en un matériau métallique, ledit revêtement (2) étant joint à une matrice thermoconductrice (3) fournie sur son côté opposé au revêtement (2) avec des reliefs de caractères en silicone ou en métal, ladite matrice thermoconductrice (3) qui est jointe à une composeuse supérieure (5) et attachée à une feuille de polyester (6) comprenant sur le côté opposé à celui auquel la matrice (3) est attachée un revêtement de peinture d'une ou plusieurs couleurs à transférer sur la surface (11) d'une plaque acrylique ou en aluminium (7), lequel appareil peut comprendre ou non sur le côté opposé de la plaque (7) une matrice (8) située sur une composeuse (9) sur laquelle un bourreur inférieur (10) agit.

2. Appareil pour incorporer des éléments graphiques sur des surfaces métalliques ou acryliques selon la revendication 1, **caractérisé en ce que** la plaque (7) peut être fournie avec des dessins générés par la matrice (8) sur le côté opposé à celui portant les éléments graphiques transférés à partir de la feuille de polyester (6).

3. Appareil pour incorporer des éléments graphiques sur des surfaces métalliques ou acryliques selon la revendication 1, **caractérisé en ce que** la surface de la plaque acrylique ou en aluminium (7) a une couleur différente de la couleur ou des couleurs comprises sur l'un des côtés de la feuille de polyester (6).

4. Appareil pour incorporer des éléments graphiques sur des surfaces métalliques ou acryliques selon la revendication 1, **caractérisé en ce que** la composeuse inférieure (9) peut avoir une cavité centrale pour placer les matrices ou il peut être fourni avec différentes saillies ou même sans cavité.

5. Appareil pour incorporer des éléments graphiques sur des surfaces métalliques ou acryliques selon la revendication 1, **caractérisé en ce que** la feuille de polyester (6) peinte comprend un revêtement de peinture d'une ou plusieurs couleurs sur le côté inférieur ou sur toute sa surface.
